# EUROPEAN PATENT SPECIFICATION

(11) **EP 2 038 190 B1**
(45) Date of publication and mention of the grant of the patent: **04.06.2014**
(21) Application number: 07764457.3
(22) Date of filing: 02.07.2007
(51) Int. Cl.: B65D 83/62, B65D 83/64

(54) **CHEMICAL PRESSURE GENERATION**
CHEMISCHE DRUCKERZEUGUNG
GÉNÉRATION DE PRESSION PAR VOIE CHIMIQUE

(30) Priority: 30.06.2006 DK 200600881; 30.06.2006 DK 200600884
(43) Date of publication of application: 25.03.2009
(73) Proprietor: Carlsberg Breweries A/S, 1760 Copenhagen V (DK)
(72) Inventor: VESBORG, Steen, DK-2820 Gentofte (DK); RASMUSSEN, Jan, Nørager, DK-3650 Ølstykke (DK)
(74) Representative: Nielsen, Henrik Sten
(86) International application number: PCT/DK2007/000327
(87) International publication number: WO 2008/000272

(56) References cited:
- EP-A- 0 100 151
- WO-A-96/37245
- US-A- 3 053 422
- US-A- 3 178 075
- US-A- 3 367 545
- US-A- 5 169 037
- US-A- 5 234 140

## Description

### Technical field

The present invention concerns a system for chemical generation of a pressure, said system comprising a container and at least two reactants, wherein said at least two reactants upon reaction generates a pressure for affecting said container.

More specifically, the present invention relates to the generation of pressure in a pressure chamber in a container, such as a vessel, keg, can, aerosol can or bottle, by means of a equilibrium reaction, which reaction forms a gas on one side of the equilibrium, which enables to control the generated pressure at the predetermined equilibrium pressure. More particularly, the present invention relates to a system for chemical generation of pressure, comprising a pressure chamber and a container, such as a vessel, keg, can, aerosol can or bottle.

Furthermore, the present invention relates to a method for chemical generation of pressure in a system according to above.

### Background of the invention

In pressure chambers there is of course a need for pressurisation. The object of pressurisation can be many, e.g. due to a decrease in pressure when the volume of a pressure chamber housing the chemicals increases, due to the need for pressurisation of containers where the content is to be driven out and of course in some cases due to protection of the content of a container from e.g, air. The pressurisation of pressure chambers according to the state of art is achieved by use of external pressure generating means.

The prior art document US 5169037 describes a dispenser, comprising a container, a product bag and a pressure regulating mechanism including a valve. The container containes reactants which by reaction produces gas. The predetermined pressure in the container is regulated by the pressure regulating mechanism. Liquid citric acid and sodium bicarbonate is mentioned as preferred reactants and their reaction product include non-toxic CO₂.

Further, US3053422 describes a refillable aerosol dispenser containing a container with liquid and designed for filling gas generating tablets /propellants, Liquid citric acid and sodiumbicarbonat mentioned as possible reactants and their reaktion product include CO₂.

The object of the present invention is to provide a system which is able to apply a stable pressure to a pressure chamber in a container, without the need of external pressure generating means.

### Summary of the invention

The object of the present invention is achieved by a system for chemical 1 generation of pressure as disclosed in the characterizing portion of claim 1, and by a method as disclosed in the characterizing portion of claim 9.

Said container may for instance be a vessel, keg, can, aerosol can or bottle, dispenser device, tube, piston, or cylinder.

The reaction of the present invention may uphold a stable predetermined equilibrium pressure. When the pressure drops, e.g. as a result of an increase in the volume of the chamber housing the chemicals, the reaction is driven towards the equilibrium, thus re-raising the pressure to the predetermined level.

The present invention finds use in all containers in which a pressure is needed in order to drive out the contents of the container. This includes applications for glue, foaming resin, polyurethan foam, soap, glue, cosmetics, pharmaceuticals, paints, and others. The invention may optionally be utilised to move a piston. The invention may for instance be utilised in e.g. in deodorants or other aerosol cans or bottles, or in order to apply pressure to another container. Preferred examples of the latter are for instance keg-in-kegs and bag-in-boxes, optionally with two or more kegs in a keg or two or more bags in a box, where at least one container is positioned inside another one.

### Detailed description of the invention

The present invention relates to a system for chemical generation of pressure, said system comprising a container and at least two reactants, wherein said at least two reactants upon reaction generates a pressure for affecting said container.

The system further comprises a pressure chamber, in which system the pressure in the pressure chamber is generated by a equilibrium reaction between the at least two reactants in the at least one container, which reaction on one side of the equilibrium forms a gas, and which system upholds a stable predetermined equilibrium pressure. The predetermined pressure level can be adjusted according to need. Other parameters, as for example the temperature of the content of the container and the reactants must be suitably chosen in relation to the pressure generating reaction. Moreover, according to the present invention it is important that the equilibrium is stable in order to avoid sudden changes in pressure.

According to one embodiment of the present invention, the system comprises more than one container and the reaction takes place in one of these containers. In this case the pressure increase of the container in which the reaction occurs is released to one of the other containers. According to a specific embodiment in this case, the system comprises two containers, such as a keg-in-keg or a bag-in-box.

As mentioned, containers according to the present invention are e.g. vessels, kegs, cans, aerosol cans or bottles.

Preferably, the system comprises an outer container and an inner container, wherein the inner container is positioned inside the outer container, i.e. a keg-in-keg or bag-in-box system, and wherein a space between the inner and outer container constitutes the pressure chamber.

According to one embodiment of the invention the system is a system for dispensing beverages. These beverages or the content in the container are e.g. juice, sodas, mineral water, soft drinks and lemonade.

The reactants and the equilibrium reaction according to the present invention are preferably non-toxic. Toxic ones are however possible in specific embodiments.

According to one embodiment of the present invention, one of the reactants is an acid, preferably citric acid. Other acids like acetic acid, fatty acids, cinnamic acid, lactic acid, malic acid, ricinoleic acid and tartaric acid are also possibe. Generally, small organic acids with a pK, which can be governed by a buffer are suitable. Suitable buffers are e.g. sodium hydrogen phosphate, potassium hydrogen phosphate, boric acid buffers, phthalic acid buffer, or others. A preferred generated gas according to the invention,is CO₂.

One preferred equilibrium reaction according to the present invention is

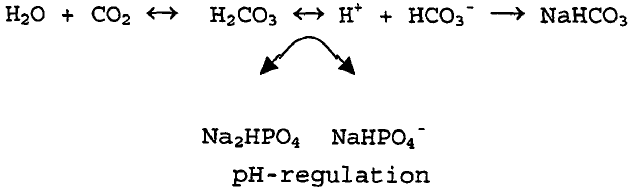

In this reaction the acid (H⁺) and the pH-regulation are used to control and regulate the generated CO₂. This makes it possible to regulate the generated pressure to a desired level. Therefore, according to one embodiment of the present invention the reactants are supplied or feed continuously to a container to be able to continuously generate a pressure, which generation is able to be regulate by means of e.g. a valve. This is one embodiment of the methods according to the present invention, but in no way preferred in all cases. Namely, in other applications according to the invention, there is no need for such a continuous pressure generation, and the need of a pressure generation and increase is just instantaneous. Hence, no continuous supply of reactants is necessary.

In another embodiment of the invention, the pressure chamber comprises at least two reactants, at least one on each side of a barrier, such as a membrane, wherein the membrane comprises a valve for allowing mixing of the at least two reactants. Upon mixing of the reactants, a reaction proceeds until equilibrium is reached. This reaction on one side of the equilibrium forms a gas, such as CO₂. Thus, mixing the reactants may generate a gas from e.g. a solid and thus create an increase in pressure. The valve may be activated by a number of factors, such as the pressure experienced by one or the other side of the valve, the temperature or by mechanical means, such as mechanical feed-back from another part of the system, e.g. a pressure sensor or it may as well be activated at the same time as the content of the container is being dispensed. The valve may be finely adjusted to any desired rate of passage in order to control the generation of pressure. For instance, one reactant can be allowed to pass the valve into the other reactant in a drop-vice manner, thereby achieving a very controlled and specific generation of pressure.

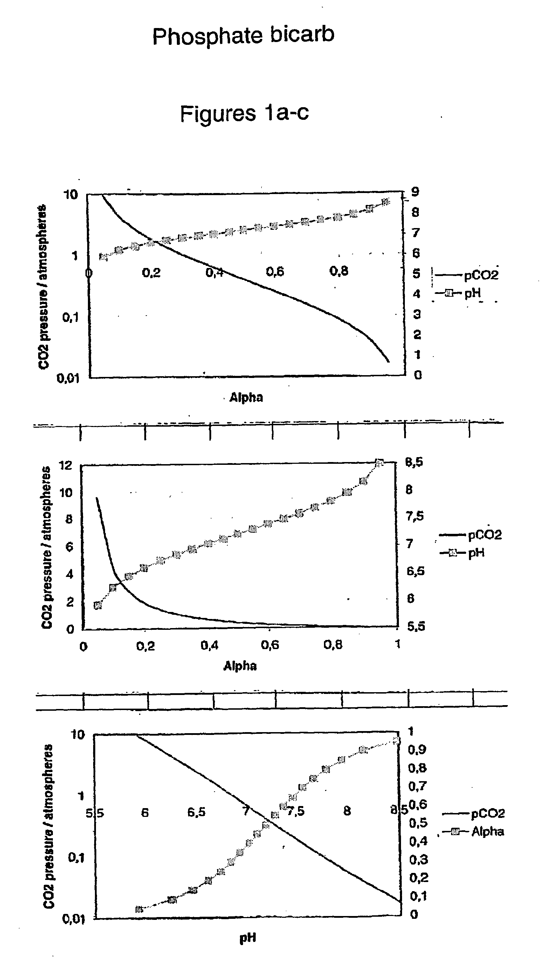

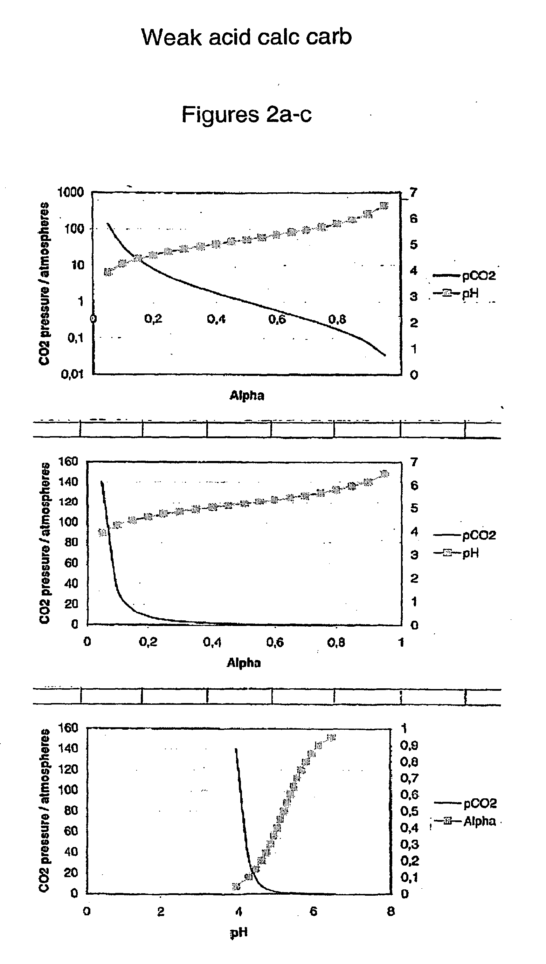

In the below table and in figures 1a, b c and Fig 2 a, b, c calculations related to the relationship between pressure and pH are described in terms of 'alpha' which is the degree of dissociation of the acid, for both the phosphate/bicarbonate system (Fig.1) and the weak acid/calcium carbonate system (Fig.2).

In the case of phosphate this refers only to the second dissociation H2PO4 --> HPO4, and it is assumed that the starting point is the addition of NaH2PO4. One could of course add a mixture of NaH2PO4 and NA2HP04 to reach an intermediate pH, but this is just equivalent to starting at a higher value of alpha. Values for the equilibrium constants quoted at 3.5M molar NaClO4 have been used - thus the calculations take into account that the system will be at high ionic strength so should be indicative.

The key point to note is that the equilibrium pressure is very sensitive to the pH, so that 1 pH unit change is equivalent to more than a decade of CO2 pressure. E.g. a 1-2 bar of CO2 pressure is achievable, by using an excess of buffer to keep the pressure within acceptable limits using the equilibrium alone. By adding salt or increasing concentration you can bring the absolute pressure down at a given pH, but the sensitivity to pH remains.

For the calcium carbonate system, illustrated in Fig 2, the sensitivity is even higher, principally because it is a divalent salt and its solubility is much lower.

If it is considered impractical to control the pressure using the equilibrium alone because of the large amount of excess buffer required, it is preferable to use such a chemical system in combination with a simple pressure control/let-down device. This will deliver gas at a constant pressure to e.g. a keg without either excessive volume or pressure in the generator. One could use the chemical equilibrium to deliver, for example, 10 bar at the start and 1 bar at the end, which would require a 3-fold stoichiometric excess of buffer. The CO2 "storage" in the form of solid bicarbonate thus limit the absolute pressure needed.

| Equilibrium constants | | | | | | |
|---|---|---|---|---|---|---|
| | | | | pK | | K |
| NaHC03 sol product Ksp | | | | 0,172630727 | | 0,672 |
| [HCO3]/[CO2] Ka1 | | | | 6,33 | | 4,68E-07 |
| [HPO4]/[H2PO4] K phos | | | | 7,21 | | 6,17E-08 |
| pCO2/[CO2] Kh | | | | 1,55 | | 0,028184 |
| Ktot | | | | 1,052630727 | | 0,088587 |
| | | | | | | |
| Phosphate concentration, molar | | | | | 4 | |
| | | | | | | |
| Background Na concentration | | | | | 2 | |
| | | | | | | |
| | Alpha | [CO2] | pCO2 | [H+] | pH | Na+ |
| | 0,05 | 0,271476 | 9,632326 | 1,17153E-06 | 5,931246 | 6,2 |
| | 0,1 | 0,124575 | 4,420097 | 5,54936E-07 | 6,255757 | 6,4 |
| | 0,15 | 0,076059 | 2,69869 | 3,49404E-07 | 6,456672 | 6,6 |
| | 0,2 | 0,05211 | 1,848929 | 2,46638E-07 | 6,60794 | 6,8 |
| | 0,25 | 0,037966 | 1,347077 | 1,84979E-07 | 6,732879 | 7 |
| | 0,3 | 0,028709 | 1,018623 | 1,43872E-07 | 6,842023 | 7,2 |
| | 0,35 | 0,022232 | 0,788829 | 1,14511E-07 | 6,941155 | 7,4 |
| | 0,4 | 0,017484 | 0,620365 | 9,24893E-08 | 7,033909 | 7,6 |
| | 0,45 | 0,013881 | 0,492521 | 7,53616E-08 | 7,12285 | 7,8 |
| | 0,5 | 0,011073 | 0,392898 | 6,16595E-08 | 7,21 | 8 |
| | 0,55 | 0,008839 | 0,313621 | 5,04487E-08 | 7,29715 | 8,2 |
| | 0,6 | 0,007031 | 0,249459 | 4,11063E-08 | 7,386091 | 8,4 |
| | 0,65 | 0,005547 | 0,1968 | 3,32013E-08 | 7,478845 | 8,6 |
| | 0,7 | 0,004314 | 0,153077 | 2,64255E-08 | 7,577977 | 8,8 |
| | 0,75 | 0,003281 | 0,116414 | 2,05532E-08 | 7,687121 | 9 |
| | 0,8 | 0,002407 | 0,085413 | 1,54149E-08 | 7,81206 | 9,2 |
| | 0,85 | 0,001663 | 0,059008 | 1,08811E-08 | 7,963328 | 9,4 |
| | 0,9 | 0,001025 | 0,036379 | 6,85106E-09 | 8,164243 | 9,6 |
| | 0,95 | 0,000476 | 0,016881 | 3,24524E-09 | 8,488754 | 9,8 |
| CaC03 sol product Ksp | | | | 7,18 | | 6,61E-08 |
| [HCO3]/[CO2] Ka1 | | | | 6,33 | | 4,68E-07 |
| [CO3]/[HCO3] Ka2 | | | | 9,56 | | 2,75E-10 |
| [X]/[HX] Ka | | | | 5,205043675 | | 6,24E-06 |
| pCO2/[CO2] Kh | | | | 1,55 | | 0,028184 |
| Ktot | | | | 1,70008735 | | 0,019949 |
| | | | | | | |
| Acid concentration, molar | | | | | 0,5 | |
| | | | | | | |
| Background Ca concentration | | | | | 2 | |
| | | | | | | |
| | Alpha | [CO2] | pCO2 | [H+] | pH | Ca2+ |
| | 0,05 | 3,955029 | 140,3297 | 0,000118498 | 3,92629 | 2,0125 |
| | 0,1 | 0,975265 | 34,60372 | 5,61305E-05 | 4,250801 | 2,025 |
| | 0,15 | 0,425353 | 15,09209 | 3,53414E-05 | 4,451716 | 2,0375 |
| | 0,2 | 0,233545 | 8,286479 | 2,49469E-05 | 4,602984 | 2,05 |
| | 0,25 | 0,145081 | 5,147661 | 1,87102E-05 | 4,727922 | 2,0625 |
| | 0,3 | 0,097206 | 3,449002 | 1,45523E-05 | 4,837067 | 2,075 |
| | 0,35 | 0,068454 | 2,42883 | 1,15825E-05 | 4,936198 | 2,0875 |
| | 0,4 | 0,049872 | 1,769509 | 9,35508E-06 | 5,028952 | 2,1 |
| | 0,45 | 0,03719 | 1,319537 | 7,62266E-06 | 5,117893 | 2,1125 |
| | 0,5 | 0,028163 | 0,999252 | 6,23672E-06 | 5,205044 | 2,125 |
| | 0,55 | 0,021519 | 0,763529 | 5,10277E-06 | 5,292194 | 2,1375 |
| | 0,6 | 0,016495 | 0,585264 | 4,15781E-06 | 5,381135 | 2,15 |
| | 0,65 | 0,012609 | 0,447385 | 3,35823E-06 | 5,473889 | 2,1625 |
| | 0,7 | 0,009546 | 0,33871 | 2,67288E-06 | 5,57302 | 2,175 |
| | 0,75 | 0,007093 | 0,251663 | 2,07891E-06 | 5,682165 | 2,1875 |
| | 0,8 | 0,0051 | 0,180972 | 1,55918E-06 | 5,807104 | 2,2 |
| | 0,85 | 0,003463 | 0,122872 | 1,1006E-06 | 5,958371 | 2,2125 |
| | 0,9 | 0,002103 | 0,074619 | 6,92969E-07 | 6,159286 | 2,225 |
| | 0,95 | 0,000963 | 0,034175 | 3,28248E-07 | 6,483797 | 2,2375 |

Moreover, the present invention could also be used in combination with a system comprising a chemical pressure generating valve, wherein a reaction is used for pressurisation of a pressure chamber in a container, wherein generation of pressure may be used as a facilitator for providing cooling via a mechanical work. In this combination the cooling process may be stopped when no pressure is generated, thus, cooling to the instantaneous need (more or less).

According to another embodiment of the present invention at least one of the containers are provided with a chemical pressure-generating valve and the reaction is a reaction which generates a gas and thereby increases the pressure in a container with a constant volume. In other words, the container or system of containers used according to the present invention can be provided with a chemical pressure-generating valve, which makes it possible to control and even regulate a possible pressure increase from a reaction which generates a gas. Therefore a derived mechanical work from the generated pressure increase is possible to control and regulate, and hence the cooling energy transfer is also possible to control, regulate and make continuous as long as there is reactants left to react with each other.

One specific embodiment of the present invention wherein the cooling is achieved by using chemical pressure-generating valve is explained in more detail below.

According to this embodiment a system for chemical generation of pressure is used, comprising at least one container, such as a vessel, keg, can, aerosol can or bottle, having a pressure chamber, a valve, a content and additionally at least two reactants, in which system the pressure in the pressure chamber is generated by a equilibrium reaction between the at least two reactants in the at least one container, which reaction on one side of the equilibrium forms a gas and which system upholds a stable predetermined equilibrium pressure by the valve, through controlled release of a gas to the pressure chamber, and which enables to control the generated pressure at the predetermined equilibrium pressure. The predetermined pressure level can be adjusted according to need, preferably by controlling the pH of the equilibrium reaction. Other parameters, as for example the temperature of the content of the container and the reactants must be suitably chosen in relation to the pressure generating reaction. Moreover, according to the present invention it is important that the equilibrium is stable in order to avoid sudden changes in pressure.

The reaction used according to this embodiment upholds a stable predetermined equilibrium pressure. When the pressure drops, e.g. as a result of an increase in the volume of the chamber housing the chemicals, the reaction is driven towards the equilibrium, thus re-raising the pressure to the predetermined level.

This embodiment finds use in all systems, wherein it is desired to apply pressure to one container from another one where the reaction occurs. Examples of such systems are keg-in-kegs and bag-in-boxes. In general of course such systems also finds use in containers in which a stable pressure is needed in order to drive out the content of the container, e.g. in deodorants or different kind of aerosol cans or bottles for spraying, etc.

According to one preferred embodiment the reaction, where a gas and hence a pressure increase is generated, is:

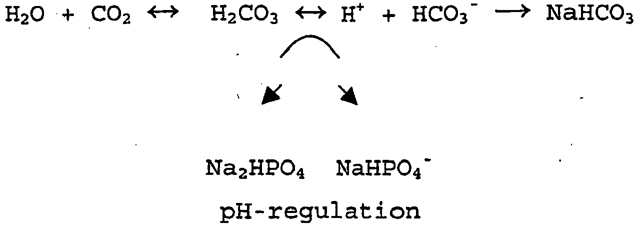

In this reaction the acid (H⁺) and the pH-regulation are essential to be able to control and regulate the generated CO₂ by means of the valve according to the invention. This makes it possible to regulate the generated pressure to a desired level and hence also the level of the mechanical work and possible cooling energy to transfer. One important thing in this sense is to use reactions which have a stable equilibrium, in order to avoid sudden changes in pressure.

The present invention also relates to a method for cooling a content of a system, which system comprises at least one container, wherein at least two reactants, excluded from the content, react with each other in the at least one container by an endothermal reaction that provides cooling energy to said content.

According to another embodiment of the present invention the reaction of the method as mentioned is a reaction which generates a gas and hence increases the pressure in the constant volume of the at least one container, which pressure increase thereby generates a mechanical work used for cooling. Preferably the container where the gas generating reaction occurs is provided in this case with a chemical pressure-generating valve, which is used for controlling the cooling.

Although the invention above has been described in connection with preferred embodiments of the invention, it will be evident for a person skilled in the art that several modifications are conceivable without departing from the invention as defined by the following claims.

## Claims

1. A system for chemical generation of a pressure, said system comprising a container and at least one pressure chamber, in which system the pressure in the pressure chamber is generated by an equilibrium reaction between at least two reactants, which reaction on one side of the equilibrium forms a gas, and which system upholds a stable predetermined equilibrium pressure in the container **characterized by** the stable predetermined equilibrium pressure is maintained by controlling the equilibrium of the chemical reaction by maintaining a stable pH in the pressure chamber

2. A system according to claim 1, wherein the at least one container is a vessel, keg, can, aerosol can or bottle.

3. A system according to claims 1 or 2, wherein the system comprises an outer container and an inner container, wherein the inner container is positioned inside the outer container, i.e a keg-in-keg or bag-in-box system, and wherein a space between the inner and outer container constitutes the pressure chamber.

4. A system according to any of the preceding claims, which is a system for dispensing beverages, and/or wherein the content of the at least one container or the beverages are chosen from the group consisting of beer, juice, sodas, mineral water, soft drinks and lemonade.

5. A system according to claims 1-4, wherein one of the at least two reactants is an acid, and preferably wherein the acid is citric acid, or wherein the acid is chosen from the group consisting of acetic acid, fatty acids, cinnamic acid, lactic acid, malic acid, ricinoleic acid and tartaric acid.

6. A system according to any of the preceding claims, wherein the at least two reactants and the generated products of the equilibrium reaction are non-toxic, and/or wherein the generated gas is CO2.

7. A system according to claims 1-6, wherein the equilibrium reaction is

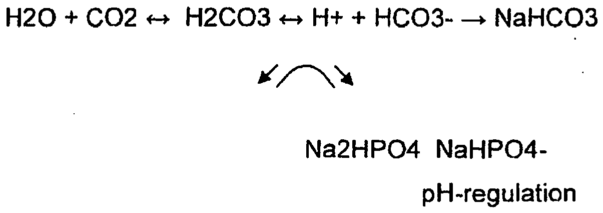

8. A system according to any of the preceding claims, wherein at least one of the containers are provided with a chemical pressure-generating valve and the reaction is a reaction which generates a gas and thereby increases the pressure in a container with a constant volume.

9. A method for chemical generation of pressure in a system, wherein said system comprises a container and at least one pressure chamber, in which system the pressure in the pressure chamber is generated by an equilibrium reaction between at least two reactants, which reaction on one side of the equilibrium forms a gas, and which system upholds a stable predetermined equilibrium pressure in the container **characterized by** the stable predetermiend equilibrium pressure is maintained by controlling the equilibrium of the chemical reaction by maintaining a stable pH in the pressure chamber

10. A method according to claim 9, wherein the at least one container is a vessel, keg, can, aerosol can or bottle.

11. A method according to claims 9 or 10, wherein the system comprises an outer container and an inner container, wherein the inner container is positioned inside the outer container (keg-in-keg, bag-in-box), and wherein a space between the inner and outer container constitutes the pressure chamber.

12. A method according to claims 9-11, which is applied on a system for dispensing beverages, and/or wherein the content of the at least one container or the beverages according to claim 11 are chosen from the group consisting of beer, juice, sodas, mineral water, soft drinks and lemonade.

13. A method according to claims 9-12, wherein one of the at least two reactants is an acid, and preferably wherein the acid is citric acid, or wherein the acid is chosen from the group consisting of acetic acid, fatty acids, cinnamic acid, lactic acid, malic acid, ricinoleic acid and tartaric acid.

14. A method according to claims 9-13, wherein the at least two reactants and the generated products of the equilibrium reaction are non-toxic, and/or wherein the generated gas is CO2.

15. A method according to claims 9-14, wherein the equilibrium reaction is

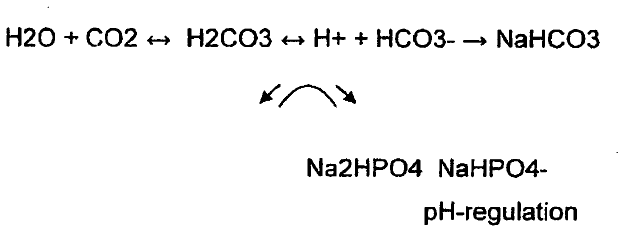

16. A method according to claims 9-15, wherein the at least two reactants are supplied or feed continuously to a system according to claims 1-12.

17. A method according to claims 9-16, wherein the reaction generates a gas which increases the pressure in the constant volume of the at least one container, which pressure increase thereby generates a mechanical work used for cooling.

18. A method according to claims 9-17, wherein at least one of the containers is provided with a chemical pressure-generating valve, which is used for controlling the cooling.

## Patentansprüche

1. System für chemische Druckerzeugung, wobei das System einen Behälter und mindestens eine Druckkammer umfasst, in welchem System der Druck in der Druckkammer durch eine Gleichgewichtsreaktion zwischen mindestens zwei Reaktanden erzeugt wird, welche Reaktion auf der einen Seite des Gleichgewichts ein Gas bildet, und welches System einen stabilen vorbestimmten Gleichgewichtsdruck im Behälter aufrechterhält, **dadurch gekennzeichnet, dass** der stabile vorbestimmte Gleichgewichtsdruck durch Steuerung des Gleichgewichts der chemischen Reaktion durch Beibehalten eines stabilen pH-Wertes in der Druckkammer beibehalten wird.

2. System nach Anspruch 1, wobei der mindestens eine Behälter ein Gefäß, ein Fass, eine Dose, eine Aerosoldose oder eine Flasche ist.

3. System nach Anspruch 1 oder 2, wobei das System einen äußeren Behälter und einen inneren Behälter umfasst, wobei der innere Behälter innerhalb des äußeren Behälters angeordnet ist, i.e. ein Fass in Fass oder Bag-in-Box System, und wobei ein Raum zwischen dem inneren und äußeren Behälter die Druckkammer bildet.

4. System nach einem der vorhergehenden Ansprüche, welches ein System zum Ausgeben eines Getränks ist, und/oder wobei der Inhalt des mindestens einen Behälters oder die Getränke aus der Gruppe bestehend aus Bier, Saft, Sodawasser, Mineralwasser, Softdrinks und Limonade ausgewählt sind.

5. System nach Ansprüchen 1-4, wobei einer der mindestens zwei Reaktanden eine Säure ist, und bevorzugt wobei die Säure Zitronensäure ist, oder wobei die Säure aus der Gruppe bestehend aus Essigsäure, Fettsäuren, Zimtsäure, Milchsäure, Apfelsäure, Rizinolsäure und Weinsäure ausgewählt ist.

6. System nach einem der vorhergehenden Ansprüche, wobei die mindestens zwei Reaktanden und die erzeugten Produkte der Gleichgewichtsreaktion nicht toxisch sind, und/oder wobei das erzeugte Gas CO2 ist.

7. System nach Ansprüchen 1-6, wobei die Gleichgewichtsreaktion ist

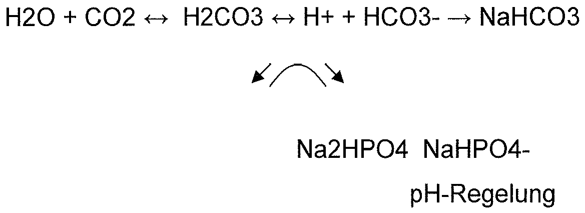

8. System nach einem der vorhergehenden Ansprüche, wobei mindestens einer der Behälter mit einem chemischen Druckerzeugungsventil versehen ist, und die Reaktion eine Reaktion ist, die ein Gas erzeugt und dadurch den Druck in einem Behälter mit einem konstanten Volumen erhöht.

9. Verfahren für chemische Druckerzeugung in einem System, wobei das System einen Behälter und mindestens eine Druckkammer umfasst, in welchem System der Druck in der Druckkammer durch eine Gleichgewichtsreaktion zwischen mindestens zwei Reaktanden erzeugt wird, welche Reaktion auf der einen Seite des Gleichgewichts ein Gas bildet, und welches System einen stabilen vorbestimmten Gleichgewichtsdruck im Behälter aufrechterhält, **dadurch gekennzeichnet, dass** der stabile vorbestimmte Gleichgewichtsdruck durch Steuerung des Gleichgewichts der chemischen Reaktion durch Beibehalten eines stabilen pH-Wertes in der Druckkammer beibehalten wird.

10. Verfahren nach Anspruch 9, wobei mindestens der eine Behälter ein Gefäß, ein Fass, eine Dose, eine Aerosoldose oder eine Flasche ist.

11. Verfahren nach Anspruch 9 oder 10, wobei das System einen äußeren Behälter und einen inneren Behälter umfasst, wobei der innere Behälter innerhalb des äußeren Behälters angeordnet ist, (Fass in Fass oder Bag-in-Box), und wobei ein Raum zwischen dem inneren und äußeren Behälter die Druckkammer bildet.

12. Verfahren nach Ansprüchen 9-11, das für ein System zum Ausgeben von Getränken angewandt wird, und/oder wobei der Inhalt des mindestens einen Behälters oder die Getränke nach Anspruch 11 aus der Gruppe bestehend aus Bier, Saft, Sodawasser, Mineralwasser, Softdrinks und Limonade ausgewählt sind.

13. Verfahren nach Ansprüchen 9-12, wobei einer der mindestens zwei Reaktanden eine Säure ist, und bevorzugt wobei die Säure Zitronensäure ist, oder wobei die Säure aus der Gruppe bestehend aus Essigsäure, Fettsäuren, Zimtsäure, Milchsäure, Apfelsäure, Rizinolsäure und Weinsäure ausgewählt ist.

14. Verfahren nach Ansprüchen 9-13, wobei die mindestens zwei Reaktanden und die erzeugten Produkte der Gleichgewichtsreaktion nicht toxisch sind, und/oder wobei das erzeugte Gas CO2 ist.

15. Verfahren nach Ansprüchen 9-14, wobei die Gleichgewichtsreaktion ist

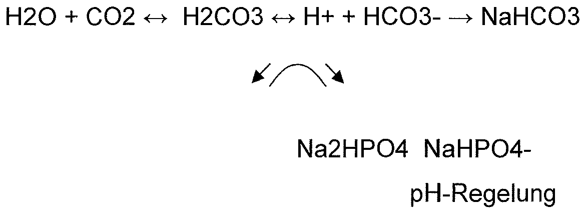

16. Verfahren nach Ansprüchen 9-15, wobei die mindestens zwei Reaktanden an ein System nach Ansprüchen 1-12 kontinuierlich geliefert oder zugeführt werden.

17. Verfahren nach Ansprüchen 9-16, wobei die Reaktion ein Gas erzeugt, das den Druck im konstanten Volumen des mindestens einen Behälters erhöht, welcher Druckanstieg dadurch eine zum Kühlen benutzte mechanische Arbeit erzeugt.

18. Verfahren nach Ansprüchen 9-17, wobei mindestens einer der Behälter mit einem chemischen Druckerzeugungsventil versehen ist, das für Steuerung des Kühlens verwendet wird.

## Revendications

1. Système de génération chimique d'une pression, ledit système comprenant un récipient et au moins une chambre de pression, dans lequel système la pression contenu dans la chambre de pression est générée par une réaction d'équilibre entre au moins deux réactifs, laquelle réaction forme un gaz sur un côté de l'équilibre, et lequel système maintient une pression d'équilibre prédéterminée stable dans le récipient, **caractérisé en ce que** la pression d'équilibre prédéterminée stable est maintenue en contrôlant l'équilibre de la réaction chimique en maintenant une valeur pH stable dans la chambre de pression.

2. Système selon la revendication 1, dans lequel le récipient, du nombre d'au moins un, est un réservoir, un fût, une boîte, un contenant aérosol ou une bouteille.

3. Système selon les revendications 1 ou 2, dans lequel le système comprend un récipient extérieur et un récipient intérieur, dans lequel le récipient intérieur est positionné dans le récipient extérieur, par exemple un système de fût-en-fût ou de bag-in-box, et dans lequel un espace entre les récipients intérieur et extérieur constitue la chambre de pression.

4. Système selon l'une quelconque des revendications précédentes, qui est un système de distribution de boissons, et/ou dans lequel le contenu du récipient, du nombre d'au moins un, ou les boissons sont choisis parmi le groupe comprenant de la bière, du jus, des sodas, de l'eau minérale, des boissons gazeuses non alcoolisés et de la limonade.

5. Système selon les revendications 1 à 4, dans lequel l'un des au moins deux réactifs est un acide, et préférablement dans lequel l'acide est un acide citrique, ou dans lequel l'acide est choisi parmi le groupe comprenant de l'acide acétique, des acides gras, de l'acide cinnamique, de l'acide lactique, de l'acide malique, de l'acide ricinolique et de l'acide tartrique.

6. Système selon l'une quelconque des revendications précédentes, dans lequel les au moins deux réactifs et les produits générés de la réaction d'équilibre sont non toxiques, et/ou dans lequel le gaz généré est du CO2.

7. Système selon les revendications 1 à 6, dans lequel la réaction d'équilibre est

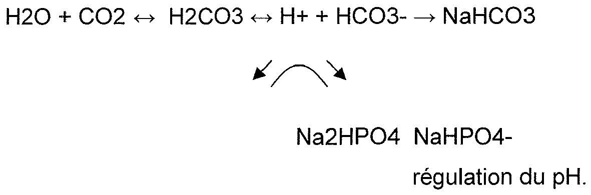

8. Système selon l'une quelconque des revendications précédentes, dans lequel au moins l'un des récipients est fourni avec une soupape de génération de pression par voie chimique et la réaction est une réaction qui génère un gaz et qui ainsi augmente la pression dans un récipient avec un volume constant.

9. Procédé de génération chimique d'une pression dans un système, dans lequel ledit système comprend un récipient et au moins une chambre de pression, dans quel système la pression contenue dans la chambre de pression est générée par une réaction d'équilibre entre au moins deux réactifs, laquelle réaction forme un gaz sur un côté de l'équilibre, et lequel système maintient une pression d'équilibre prédéterminée stable dans le récipient **caractérisé en ce que** la pression d'équilibre prédéterminée stable est maintenue en contrôlant l'équilibre de la réaction chimique en maintenant une valeur pH stable dans la chambre de pression.

10. Procédé selon la revendication 9, dans lequel au moins le récipient, du nombre d'au moins un, est un réservoir, un fût, une boîte, un contenant aérosol ou une bouteille.

11. Procédé selon l'une des revendications 9 ou 10, dans lequel le système comprend un récipient extérieur et un récipient intérieur, dans lequel le récipient intérieur est positionné dans le récipient extérieur (fût-en-fût, bag-in-box), et dans lequel un espace entre les récipients intérieur et extérieur constitue la chambre de pression.

12. Procédé selon les revendications 9 à 11, qui est appliqué sur un système pour la distribution de boissons, et/ou dans lequel le contenu, du nombre d'au moins un, ou les boissons selon la revendication 11 sont choisis parmi le groupe comprenant de la bière, du jus, des sodas, de l'eau minérale, des boissons gazeuses non alcoolisés et de la limonade.

13. Procédé selon les revendications 9 à 12, dans lequel l'un des au moins deux réactifs est un acide, et préférablement dans lequel l'acide est un acide citrique, ou dans lequel l'acide est choisi parmi le groupe comprenant de l'acide acétique, des acides gras, de l'acide cinnamique, de l'acide lactique, de l'acide malique, de l'acide ricinolique et de l'acide tartrique.

14. Procédé selon les revendications 9 à 13, dans lequel les au moins deux réactifs et les produits générés de la réaction d'équilibre sont non toxiques, et/ou dans lequel le gaz généré est du CO2.

15. Procédé selon les revendications 9 à 14, dans lequel la réaction d'équilibre est

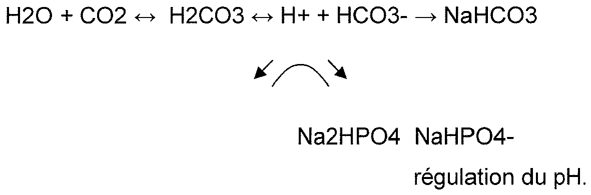

16. Procédé selon les revendications 9 à 15, dans lequel les au moins deux réactifs sont fournis ou alimentés continuellement à un système selon les revendications 1 à 12.

17. Procédé selon les revendications 9 à 16, dans lequel la réaction génère un gaz qui augmente la pression dans le volume constant du récipient, du nombre d'au moins un, laquelle augmentation de pression générant ainsi un travail mécanique utilisé pour le refroidissement.

18. Procédé selon les revendications 9 à 17, dans lequel au moins un des récipients est fourni d'une soupape de génération de pression chimique, qui est utilisée pour le contrôle du refroidissement.
